# EUROPÄISCHE PATENTSCHRIFT

(11) **EP 3 013 502 B1**
(45) Veröffentlichungstag und Bekanntmachung des Hinweises auf die Patenterteilung: **22.11.2017**
(21) Anmeldenummer: 14741200.1
(22) Anmeldetag: 27.06.2014
(51) Int. Cl.: B22F 3/105, B22F 5/10, B22F 7/06

(54) **VERFAHREN UND BEARBEITUNGSMASCHINE ZUM GENERIEREN EINES DREIDIMENSIONALEN BAUTEILS DURCH SELEKTIVES LASERSCHMELZEN**
METHOD AND PROCESSING MACHINE FOR CREATING A THREE-DIMENSIONAL COMPONENT BY SELECTIVE LASER MELTING
PROCÉDÉ ET MACHINE DE TRAITEMENT DE FABRICATION ADDITIVE D'UN ÉLÉMENT TRIDIMENSIONNEL PAR FUSION SÉLECTIVE PAR LASER

(30) Priorität: 28.06.2013 DE 102013212620
(43) Veröffentlichungstag der Anmeldung: 04.05.2016
(73) Patentinhaber: Trumpf GmbH + Co. KG, 71254 Ditzingen (DE)
(72) Erfinder: KOERBER, Christian, 71679 Asperg (DE)
(74) Vertreter: Kohler Schmid Möbus Patentanwälte
(86) Internationale Anmeldenummer: PCT/EP2014/001771
(87) Internationale Veröffentlichungsnummer: WO 2014/206573

(56) Entgegenhaltungen:
- EP-A1- 2 415 552
- WO-A1-2005/069029
- MOHAMMAD VAEZI ET AL.: "A review on 3D micro-additive manufacturing technologies", The international journal of advanced manufacturing technology, Bd. 67, Nr. 5-8 25. November 2012 (2012-11-25), 1. Juli 2013 (2013-07-01), Seiten 1721-1754, XP055170177, ISSN: 0268-3768, DOI: 10.1007/s00170-012-4605-2 Gefunden im Internet: URL:http://download.springer.com/static/pd f/950/art%253A10.1007%252Fs00170-012-4605- 2.pdf?auth66=1424186102_d271adf33a9728f7fe 587ba7302f26da&ext=.pdf [gefunden am 2015-02-17]

## Beschreibung

Die vorliegende Erfindung betrifft ein Verfahren zum Generieren eines dreidimensionalen Bauteils durch selektives Laserschmelzen. Die Erfindung betrifft auch eine Bearbeitungsmaschine zum Generieren eines dreidimensionalen Bauteils durch selektives Laserschmelzen, welche eine Prozesskammer umfasst.

Beim selektiven Laserschmelzen (engl. "selective laser melting", auch: SLM) handelt es sich um ein generatives Fertigungsverfahren, bei dem ein (metallischer) Pulverwerkstoff mittels eines Lasers an definierten Stellen umgeschmolzen wird. Das selektive Laserschmelzen ermöglicht die Herstellung von Bauteilen mit nahezu beliebig gestaltbarer dreidimensionaler Bauteilgeometrie. Um dreidimensionale Bauteile zu erzeugen, wird das selektive Laserschmelzen in aller Regel schichtweise durchgeführt, d.h. es erfolgt ein schichtweises Formschweißen. Hierbei wird zunächst das Werkstoffpulver als dünne Schicht auf einer Grundplatte verteilt. Nachdem das Werkstoffpulver dieser ersten Schicht des Pulverbetts durch den Laser entsprechend der Sollkontur des zu erzeugenden Bauteils an den erforderlichen Stellen umgeschmolzen wurde und zu einer ersten festen Materialschicht erstarrt ist, wird die Grundplatte um den Betrag der ersten Schicht abgesenkt bzw. verfahren und eine neue (zweite) Schicht wird aufgebracht. An dieser Schicht wird das Laserschmelzen entsprechend wiederholt, wobei sich umgeschmolzenes Material der aktuell obersten Schicht mit unmittelbar darunter angeordnetem festem Material verbindet. Der vorbeschriebene Ablauf wird so häufig wiederholt, bis das zu generierende Bauteil vollständig erzeugt ist.

Zur einfacheren Entnahme des fertiggestellten Bauteils kann auf der Grundplatte bzw. dem Substrat eine vergleichsweise filigrane Stützstruktur aufgebaut werden, die das eigentliche Bauteil trägt. Diese Stützstruktur kann nach der Entnahme des Bauteils z.B. manuell entfernt werden. Je nach Geometrie des zu generierenden Bauteils (beispielsweise bei Überhängen) können ggf. auch weitere Stützen bzw. Stützstrukturen generiert und vor der Nutzung des Bauteils entfernt werden.

Das Laserschmelzen erfolgt dabei in einer Prozesskammer, die typischerweise hermetisch abgeschlossen ist, und in der eine möglichst homogene Atmosphäre eingestellt wird, wobei der zum Schmelzen des Pulverwerkstoffs erforderliche Laser durch ein Prozesskammerfenster in die Prozesskammer hineinstrahlt. Damit der Laserstrahl an den für die gewünschte Bauteilgeometrie erforderlichen Stellen auf den Pulverwerkstoff einwirken kann, wird der Laserstrahl typischerweise über eine Scannervorrichtung abgelenkt.

Aufgrund der kontinuierlichen Lasereinstrahlung ist ggf. eine gezielte Wärmeführung erforderlich, um geometrische Abweichungen von der Sollgeometrie und insbesondere Erstarrungsrisse aufgrund von thermisch induzierten Eigenspannungen zu vermeiden und insbesondere unerwünschte Werkstoffstrukturen, wie beispielsweise Grobkorn, zu unterbinden.

Zur Handhabung bzw. Kontrolle dieser nachteiligen Folgen ist es bekannt, das Bauteil wärmezubehandeln, nachdem es durch das Laserschmelzen fertiggestellt wurde. Diese Wärmebehandlung kann zum Beispiel gemäß der Offenbarung der WO2012/055398 A1 in einer externen Heizeinrichtung (einem Ofen) erfolgen, in die das Bauteil nach Fertigstellung verbracht wird, oder ggf. in der Prozesskammer selbst, nachdem das restliche, nicht umgeschmolzene Werkstoffpulver entfernt wurde.

Auch die EP 2 415 552 A1 offenbart das Erhitzen des fertiggestellten Bauteils zur Optimierung von dessen Materialeigenschaften im Anschluss an den selektiven Laserschmelzprozess. Das Erhitzen erfolgt dabei mittels einer Heizspule, die mit dem zu generierenden Bauteil in demselben selektiven Laserschmelzprozess erzeugt wird und die sich daher zusammen mit dem erzeugten Bauteil im Werkstoffpulver befindet. Nach dem Entfernen des Werkstoffpulvers wird die Heizspule zur Einkopplung der Heizleistung an eine elektrische Energiequelle angeschlossen.

Der Wärmehaushalt des entstehenden Bauteils kann auch bereits während des selektiven Laserschmelzens indirekt beeinflusst werden, indem zum Beispiel die Grundplatte beheizt wird, oder zu Kühlzwecken Wärmetauscher in Halteeinrichtungen eingebracht werden. Ein solches Vorgehen wird auch in der EP 2 415 552 A1 offenbart, bei der das Bauteil von einem Halter unterstützt bzw. gehalten wird, der das Werkstück an der Auflagestelle kühlt, sodass empfindliche Bereiche des Bauteils keinen zu hohen Temperaturen ausgesetzt sind.

Beim einem generativen Fertigungsverfahren in Form des selektiven Elektronenstrahlschmelzens ("selective Electron Beam Melting", SEBM), bei dem das Aufschmelzen des Werkstoffpulvers an Stelle eines Laserstrahls mit Hilfe eines Elektronenstrahls erfolgt, kann die Wärmeführung durch das Ablenken des Elektronenstrahls im Vorfeld und/oder im Nachgang zum eigentlichen Herstellungsprozess beeinflusst werden.

Die WO2012/055398 A1 lehrt ferner eine gezielte Veränderung der Zusammensetzung des Werkstoffs des durch selektives Laserschmelzen erzeugten Bauteils durch den Einsatz reaktiver Gase in der Prozesskammer, wobei die Veränderung der Zusammensetzung der Erhöhung der thermischen Belastbarkeit des Bauteils dienen soll.

Beim selektiven Laserschmelzen ist jedoch die Zugänglichkeit der Prozesszone während des Generierens des Bauteils und somit die Möglichkeit, den Prozess aktiv lokal, d.h. vor Ort, zu beeinflussen, prinzipbedingt reduziert.

### Aufgabe der Erfindung

Es ist die Aufgabe der vorliegenden Erfindung, ein Verfahren und eine Bearbeitungsmaschine zum Generieren eines dreidimensionalen Bauteils durch selektives Laserschmelzen dahingehend zu verbessern, dass die Qualität des mittels der Bearbeitungsmaschine generierten Bauteils gesteigert werden kann.

### Gegenstand der Erfindung

Diese Aufgabe wird gelöst durch das eingangs genannte Verfahren, umfassend die Schritte: Generieren mindestens einer Prozessbeeinflussungseinrichtung durch das selektive Laserschmelzen während des Generierens des dreidimensionalen Bauteils, sowie Aktivieren der Prozessbeeinflussungseinrichtung zum Einwirken auf einen bereits fertiggestellten Bereich des Bauteils vor der Fertigstellung des dreidimensionalen Bauteils, wobei als Prozessbeeinflussungseinrichtung ein elektrischer Leiter generiert wird, der zum Einwirken auf den bereits fertiggestellten Bereich mit einem Stromfluss beaufschlagt wird.

Der elektrische Leiter kontaktiert den bereits fertiggestellten Bereich des Bauteils oder ist von diesem beabstandet. Durch einen elektrischen Leiter, der an einer oder an mehreren - bevorzugt mindestens zwei - Stellen mit dem zumindest teilweise generierten Bauteil in Kontakt steht, ist es möglich, das Bauteil oder Bauteilbereiche des noch nicht vollständig fertiggestellten Bauteils durch Beaufschlagen des elektrischen Leiters durch einen Stromfluss konduktiv zu erwärmen. Auf diese Weise kann noch vor der Fertigstellung des Bauteils die Bauteilgenerierung thermisch beeinflusst werden. Dabei kann der elektrische Leiter über dessen Zu- bzw. Ableitungsende durch eine als Spannungserzeugungseinrichtung ausgebildete Versorgungseinrichtung mit Strom beaufschlagt werden, sodass in dem stromdurchflossenen Bereich des Bauteils eine Erwärmung stattfindet. Der bzw. die in der Regel dünnen elektrischen Leiter stellen in diesem Falle gewissermaßen Vorzugswege für den elektrischen Strom bzw. Strompfade im metallischen Pulver dar. Die Dichte der elektrischen Leiter und deren elektrische Leitfähigkeit ist in der Regel größer als die Dichte und Leitfähigkeit des umgebenden metallischen Pulvers. Durch die zeitgleich zum Aufbau des dreidimensionalen Bauteils generierte Prozessbeeinflussungseinrichtung und deren Aktivierung vor der Fertigstellung des Bauteils kann in vorteilhafter Weise eine direkte, insbesondere lokale Beeinflussung der Generierung des dreidimensionalen Bauteils stattfinden. Die Prozessbeeinflussungseinrichtung wird hierbei aktiviert, wenn diese noch vom Pulverwerkstoff umgeben ist, d.h. bevor das restliche, nicht umgeschmolzene Werkstoffpulver aus der Prozesskammer entfernt wird. Auf diese Weise kann die Qualitätsfähigkeit des selektiven Laserschmelzverfahrens sowie die Qualität des durch ein solches Verfahren generierten Bauteils wesentlich erhöht werden. Durch das hier beschriebene Verfahren können insbesondere Prozessbeeinflussungseinrichtungen generiert werden, die das herzustellende Bauteil je nach dessen individueller geometrischer Ausprägung in einer angepassten Art und Weise beeinflussen. Die Prozessbeeinflussungseinrichtungen werden typischer Weise nach der Fertigstellung des Bauteils nicht mehr benötigt und entsorgt.

Durch die Prozessbeeinflussungseinrichtung kann thermisch und ggf. chemisch auf einen bereits fertiggestellten Bereich des Bauteils eingewirkt werden. Mittels der Prozessbeeinflussungseinrichtung wird thermisch auf einen fertiggestellten Bereich des Werkstücks eingewirkt, indem beispielsweise eine gewünschte Wärmeverteilung oder eine bestimmte Wärmeführung in dem fertiggestellten Bereich erzeugt wird, so kann vorteilhaft die Bildung von Heißrissen, das Einstellen eines Verzugs des Bauteils, eine Grobkornbildung und/oder das Erzeugen unerwünschter metallischer Phasen etc. verhindert oder zumindest in wesentlichem Maße abgemildert werden. Darüber hinaus können durch ein thermisches Einwirken auf den bereits fertiggestellten Bereich auch Wärmeausdehnungsprobleme, die sich insbesondere im Bereich einer herkömmlich beheizten Grundplatte einer Bearbeitungsmaschine zum selektiven Laserschmelzen einstellen können, verringert werden. Wird gegebenenfalls zusätzlich mittels der Prozessbeeinflussungseinrichtung chemisch auf einen fertiggestellten Bereich eingewirkt, indem zum Beispiel reaktive Gase zu dem bereits fertiggestellten Bereich des Bauteils geführt werden, so kann gezielt auf die metallurgische Beschaffenheit des Bauteils Einfluss genommen werden. Sowohl im Falle einer thermischen als auch einer chemischen Einwirkung kann folglich die Qualität des Laserschmelzverfahrens als auch die Qualität des hergestellten dreidimensionalen Bauteils verbessert bzw. erhöht werden.

Bei dem hier beschriebenen Verfahren werden das Bauteil und die Prozessbeeinflussungseinrichtung typischer Weise durch einen Laser oder durch mehrere gleichzeitig arbeitende Laser einer das Laserschmelzen durchführenden Bearbeitungsmaschine in ein- und derselben Prozesskammer generiert. Bei der Verwendung eines einzigen Lasers bzw. eines einzigen Laserstrahls, der mittels eines Galvanoscanners abgelenkt wird, wirkt sich die prinzipbedingt geringe Ablenkgeschwindigkeit ggf. nachteilig aus. Möglichkeiten zur Erhöhung der Ablenkgeschwindigkeit stellen beispielsweise Laserarrays (im Sinne einer ansteuerbaren Matrix von Lasern), Polygonscanner oder Solid State Scanner dar. Das Bauteil und die Prozessbeeinflussungseinrichtung werden hierbei typischer Weise aus demselben Werkstoffpulver generiert. Es versteht sich, dass nach der Fertigstellung des dreidimensionalen Bauteils mittels der Prozessbeeinflussungseinrichtung ebenfalls eine herkömmliche Nachbehandlung erfolgen kann.

Bei einer bevorzugten Variante wird die Prozessbeeinflussungseinrichtung beim Generieren mit einer Funktionsschnittstelle einer das Laserschmelzen durchführenden Bearbeitungsmaschine verbunden. Über die Funktionsschnittstelle kann die im Inneren der Prozesskammer der Bearbeitungsmaschine generierte Prozessbeeinflussungseinrichtung mit einer in der Regel außerhalb der Prozesskammer angeordneten Versorgungseinrichtung zusammenwirken. Die Versorgungseinrichtung dient zum Versorgen der Prozessbeeinflussungseinrichtung mit den für das Einwirken auf den bereits fertiggestellten Bereich des Bauteils erforderlichen Mitteln. Gemäß dieser Verfahrensvariante wird die Prozessbeeinflussungseinrichtung in einem mit der Funktionsschnittstelle verbundenen Zustand generiert, sodass eine Inbetriebnahme der Prozessbeeinflussungseinrichtung unmittelbar nach deren Fertigstellung und noch während der (weiteren) Fertigung des eigentlichen Bauteils bzw. Produktes möglich ist. Es ist somit nicht erforderlich, die Prozessbeeinflussungseinrichtung in einem zusätzlichen Verfahrensschritt mit der Funktionsschnittstelle bzw. mit der Versorgungseinrichtung zu verbinden.

Bei einer weiter bevorzugten Variante wird die Prozessbeeinflussungseinrichtung beim Generieren jeweils über ein Zuleitungsende und ein Ableitungsende mit der Funktionsschnittstelle verbunden. Somit kann ausgehend von der Versorgungseinrichtung über die Funktionsschnittstelle und das mit der Funktionsstelle verbundene Zuleitungsende der Prozessbeeinflussungseinrichtung sowie weiter über die Prozessbeeinflussungseinrichtung und deren mit der Funktionsschnittstelle verbundenem Ableitungsende zurück zur Versorgungseinrichtung ein Funktionskreislauf gebildet werden. In diesem Funktionskreislauf können sich Mittel zum Einwirken auf den bereits fertiggestellten Bereich, die von der Versorgungseinrichtung bereitgestellt werden, ausbreiten.

Bei einer bevorzugten Variante wird der elektrische Leiter derart generiert, dass er zur Bildung einer Induktionsschleife den bereits fertiggestellten Bereich des dreidimensionalen Bauteils zumindest teilweise umgibt. Wenn die Prozessbeeinflussungseinrichtung das dreidimensionale Bauteil bzw. den bereits fertiggestellten Bereich umschließt, kann der elektrische Leiter zur Prozessbeeinflussung als Induktor bzw. als Induktionsheizgerät zum Aufheizen des Bauteils in dem bereits fertiggestellten Bereich eingesetzt werden. Dabei wird der elektrische Leiter in der Regel durch die als Spannungserzeugungseinrichtung ausgebildete Versorgungseinrichtung mit einem alternierend angelegten Gleichstrom oder einem Wechselstrom mit vorgegebener Frequenz beaufschlagt, sodass in dem von dem elektrischen Leiter umgebenen bereits fertiggestellten Bereich des Bauteils Wechselströme induziert werden, die eine induktive Erwärmung des fertiggestellten Bereichs des Bauteils zur Folge haben. Die Beaufschlagung der elektrischen Leitung bzw. des Induktors mit Strom wird erfindungsgemäß noch vor Fertigstellung des Bauteils durchgeführt (allerdings zeitlich nach der vollständigen Generierung der die Prozessbeeinflussungseinrichtung bildenden elektrischen Leiters, die zur Erzeugung des geschlossenen Stromkreises benötigt wird). Auf diese Weise kann das Bauteil in dem bereits fertiggestellten Bereich bereits während der Generierung gezielt wärmebehandelt werden. Die gezielte induktive Wärmebehandlung ist insbesondere vorteilhaft gegenüber der herkömmlichen konduktiven Wärmeeinwirkung, bei der Wärme konduktiv von der beheizten Grundplatte ggf. zunächst über vergleichsweise filigrane, eine Stützstruktur bildende Bauteilabschnitte und anschließend in das eigentliche Bauteil geleitet wird. Demgegenüber kann durch die induktive Wärmeeinwirkung eine gleichmäßigere Energieflussdichte erzielt werden.

Um eine Versinterung von zwischen dem Bauteil und dem elektrischen Leiter vorhandenem metallischen Pulver zu verhindern, wird bevorzugt der konduktive elektrische Widerstand im elektrischen Leiter geringer als der induzierte elektrische Widerstand im generierten Bauteil gewählt. Dies kann, insbesondere bei der Verwendung von gleichem Material für das Bauteil und für den elektrischen Leiter dadurch erreicht werden, dass die Materialdichte und/oder die Geometrie, beispielsweise der Leiterquerschnitt, des elektrischen Leiters geeignet gewählt werden. Um eine unerwünschte Erwärmung des elektrischen Leiters/Induktorleiters zu verhindern, kann beispielsweise dessen Leiterquerschnitt im Vergleich zur Wandstärke des metallischen Bauteils vergrößert werden. Beispielsweise wird ein metallisches Bauteil mit einer Wandstärke von weniger als 1 mm in dem Metallpulverbett deutlich stärker erwärmt als der elektrische Leiter / Induktorleiter mit einem Durchmesser von 4 mm. Alternativ oder zusätzlich zur Anpassung der Geometrie bzw. zur Vergrößerung des Leiterquerschnitts kann der elektrische Leiter auch aktiv mittels einer nicht bzw. nur schwach elektrisch leitenden Flüssigkeit gekühlt werden, die beispielsweise durch einen in dem Leiter vorgesehenen Hohlraum geführt wird. Es hat sich gezeigt, dass bei geeigneter Wahl der Geometrie auch eine hohe Stromstärke von zeitweise ca. 100 A durch den elektrischen bzw. metallischen Leiter nicht zu einer Versinterung des zwischen dem Bauteil und dem elektrischen Leiter vorhandenen metallischen Pulvers geführt hat.

Bei der induktiven Wärmeeinkopplung überwiegt somit der Wärmeeintrag in den fertiggestellten Bereich des Bauteils, während das Werkstoffpulver aufgrund der vergleichsweise geringen Schüttdichte und der geringen Partikelgröße kaum erwärmt wird. Der elektrische Leiter ist bevorzugt massiv ausgebildet, kann ggf. aber auch einen Hohlraum aufweisen (s.o.). Es versteht sich, dass beispielsweise zur Beeinflussung eines ersten fertiggestellten Bereichs des Bauteils ein erster elektrischer Leiter als erste Prozessbeeinflussungseinrichtung generiert und in Betrieb genommen werden kann, um den ersten Bereich induktiv zu erwärmen, und dass zeitgleich oder anschließend zur Beeinflussung eines zweiten fertiggestellten Bereichs des Bauteils ein zweiter elektrischer Leiter als zweite Prozessbeeinflussungseinrichtung generiert und in Betrieb genommen werden kann, um den zweiten Bereich induktiv zu erwärmen, wobei der von den beiden elektrischen Leitern in dem Bauteil erzeugte Wärmeeintrag unterschiedlich sein kann.

Der elektrische Leiter bzw. der Induktor kann im einfachsten Fall durch eine einzige Windung bzw. Schleife gebildet sein. Im Falle mehrerer elektrischer Leiter bzw. mehrerer Prozessbeeinflussungseinrichtungen sind diese Windungen bzw. Schleifen typischerweise in elektrischer Hinsicht unabhängig. Grundsätzlich ist es auch möglich, wendelförmige, den fertiggestellten Bereich des Bauteils umgebende elektrische Leiter zu generieren, wobei in diesem Fall die Inbetriebnahme bzw. die Aktivierung der Prozessbeeinflussungseinrichtung vergleichsweise lange dauert, da diese erst erfolgen kann, wenn das in der Aufbaurichtung oben liegende Ende des elektrischen Leiters generiert wurde.

Bei dieser Verfahrensvariante wird als Mittel zum Einwirken auf den bereits fertiggestellten Bereich des Bauteils ein alternierend angelegter Gleichstrom oder ein Wechselstrom einer bestimmten Stromstärke und Frequenz in dem durch die Versorgungseinrichtung, die Funktionsschnittstelle und den elektrischen Leiter gebildeten Funktionskreislauf transportiert. Der elektrische Leiter oder eine Rohrleitung (s.u.) wird in diesem Fall beim Generieren mit einer Funktionsschnittstelle beispielsweise in Form von - bevorzugt lösbaren - Durchsteckkontakten verbunden. Derartige Durchsteckkontakte können durch Öffnungen bzw. Durchbrüche in der Prozesskammerwand oder der Grundplatte hindurchgeführt und an der Prozesskammerwand oder der Grundplatte insbesondere beidseitig befestigt, z.B. verschraubt, und abgedichtet werden.

Die Durchsteckkontakte können als Funktionsschnittstelle bzw. als Andockstelle für die Prozessbeeinflussungseinrichtung, beispielsweise den elektrischen Leiter bzw. die Rohrleitung, dienen und dichten die Prozesskammer bzw. die Grundplatte nach außen ab. Die Durchsteckkontakte können am der Prozesskammer abgewandten Ende einen Kontakt zu einer Versorgungseinrichtung für die Prozessbeeinflussungseinrichtung bilden. Beispielsweise kann ein Kontakt zu einer externen Stromquelle hergestellt werden oder eine fluiddichte Verbindung zur einer Medienquelle bzw. -senke für ein Fluid (eine Flüssigkeit oder ein Gas). Die Durchsteckkontakte können elektrisch und/oder thermisch gegen die Prozesskammerwand bzw. die Grundplatte isoliert werden. Die Durchsteckkontakte können auch eine separate, isolierte Substratplatte bilden, die nach der Fertigstellung des elektrischen Leiters bzw. Induktors mit Strom beaufschlagt wird. Sind die Durchsteckkontakte lösbar ausgebildet, können aufgabenspezifisch (für elektrische Leitung oder für Medienführung) optimierte Funktionsschnittstellen realisiert werden. Werden keine Durchsteckkontakte benötigt, so können die Öffnungen bzw. Durchbrüche in der Prozesskammerwand und/oder der Grundplatte durch geeignete Verschlüsse, z.B. durch Kappen, verschlossen werden. Die Grundplatte bzw. die Prozesskammerwand kann beispielsweise eine Mehrzahl von Durchbrüchen z.B. in der Art einer Rasteranordnung aufweisen, um die Durchsteckkontakte aufzunehmen. In Abhängigkeit von der Geometrie des Bauteils werden geeignet positionierte Durchbrüche ausgewählt, um dort Durchsteckkontakte anzubringen, die für die zu generierende Prozessbeeinflussungseinrichtung benötigt werden. Nach der Fertigstellung des Bauteils sowie nach der Entnahme aus der Prozesskammer können die Durchsteckkontakte gelöst, gereinigt und gegebenenfalls entsorgt werden.

Bevorzugt ist auch eine Variante, bei der das Werkstoffpulver zum Generieren des Bauteils und/oder der Prozessbeeinflussungseinrichtung ausgewählt ist aus der Gruppe umfassend: Edelstahl, Werkzeugstahl, Aluminium, Aluminiumlegierungen, Titan, Titanlegierungen, Chrom-Kobalt-Molybdän-Legierungen, Bronzelegierungen, Edelmetalllegierungen, Nickelbasislegierungen, Kupferlegierungen. Diese Werkstoffpulver ermöglichen hinsichtlich der Materialbeschaffenheit des durch das Laserschmelzen erzeugten Bauteils hochwertige Ergebnisse. Darüber hinaus stellt sich bei diesen Werkstoffpulvern vorteilhafterweise kein elektrischer Durchschlag ein, wenn erfindungsgemäß bereits vor der vollständigen Fertigstellung des Bauteils die als elektrischer Leiter bzw. Induktor ausgebildete Prozessbeeinflussungseinrichtung in Betrieb genommen wird und sich das Werkstoffpulver in Bereichen der Prozesskammer befindet, die zwischen einzelnen Abschnitten des elektrischen Leiters bzw. zwischen dem Leiter und dem Werkstück angeordnet sind. Bei den meisten der für das selektive Laserschmelzen geeigneten Materialien, insbesondere bei Aluminium bzw. bei Aluminium-Legierungen, ist der elektrische Widerstand des Werkstoffs in Pulverform um ca. eine Größenordnung höher als der elektrische Widerstand des im Laserschmelzverfahren generierten (erstarrten) Materials des Bauteils bzw. der Prozessbeeinflussungseinrichtung, sodass eine Inbetriebnahme der Prozessbeeinflussungseinrichtung während des Generierens des Bauteils auch in sicherheitstechnischer Hinsicht unbedenklich ist.

Ebenfalls bevorzugt ist eine Variante, bei der als Prozessbeeinflussungseinrichtung eine Rohrleitung für gasförmige oder flüssige Medien generiert wird. Durch eine derartige Rohrleitung können Fluide, d.h. gasförmige oder flüssige Medien, von der Versorgungseinrichtung zu dem bereits fertiggestellten Bereich des Bauteils (und ggf. zurück) transportiert werden, um diesen gezielt zu beeinflussen. Die Rohrleitung dient in diesem Fall quasi als Aufsatz, um an dem jeweiligen Bereich das Fluid direkt in Kontakt mit dem Bauteil zu bringen, beispielsweise um Gradientenwerkstoffe zu realisieren. Als Rohrleitungen werden im Sinne dieser Anmeldung auch Rohrleitungen in Form von Hohlkörperstrukturen verstanden, die eine geringere Dichte als das umgebende Pulverbett aufweisen, insbesondere (filigrane) poröse Strukturen, durch die ebenfalls Fluide transportiert werden können. Derartige Rohrleitungen können grundsätzlich von einem rohrförmigen Mantel umschlossen oder ggf. gegenüber dem Pulverbett offen ausgebildet sein. Beispielsweise können als Rohrleitungen Metallschäume generiert werden, die als Hohlkörperstrukturen im metallischen Pulver einen Vorzugstransportweg für ein Fluid darstellen.

Auch kann eine derartige Rohrleitung ein offenes Ende aufweisen und ein aus diesem austretendes Gas kann gezielt dazu verwendet werden, in der Prozesskammer eine Strömung zu erzeugen, die durch das Laserschmelzen entstehende gasförmige Prozessemissionen von dem Einflussbereich des Lasers abhält und/oder die eine Ablagerung solcher Prozessemissionen an dem Prozesskammerfenster verhindert. Dabei wird typischer Weise eine laminare Strömung erzeugt. Auf diese Weise kann verhindert werden, dass gasförmige Prozessemissionen in nachteiliger Weise mit dem das selektive Laserschmelzen durchführenden Laserstrahl interagieren bzw. sich an dem Prozesskammerfenster anlagern und das Prozessergebnis negativ beeinflussen. Auf diese Weise kann insbesondere die Zeitstandfestigkeit des Prozesskammerfensters erhöht werden und es kann gegebenenfalls auf den Einsatz von Crossjets zur Entfernung der Emissionen aus der Prozesszone verzichtet werden.

Die Rohrleitungen können alternativ oder zusätzlich auch als Heiz- und/oder Kühlkanäle verwendet werden, um thermisch auf den bereits fertiggestellten Bereich des Bauteils einzuwirken und eine Wärmebehandlung bzw. Wärmeeinwirkung im vorbeschriebenen Sinne zu erzielen. In diesem Fall ist die Rohrleitung typischerweise über ein Zuleitungsende der Rohrleitung und ein Ableitungsende der Rohrleitung mit der Funktionsschnittstelle verbunden, so dass zusammen mit der Versorgungseinrichtung ein Funktionskreislauf entsteht, in dem das gasförmige oder flüssige Medium geführt ist. Es versteht sich, dass die im selektiven Laserschmelzverfahren generierte Rohrleitung zur Durchströmung mit dem gasförmigen oder flüssigen Medium entsprechend dem beabsichtigten Einsatzzweck (Kühlen oder Heizen) ausgelegt ist, d.h. die Rohrleitung ist strukturell ausreichend fest dimensioniert, dass sie dem jeweiligen Druck bzw. der Temperatur des gasförmigen oder flüssigen Mediums standhalten kann.

Bei einer weiteren bevorzugten Variante verlaufen der elektrische Leiter und/oder die Rohrleitung abschnittsweise horizontal, d.h. der elektrische Leiter und/oder die Rohrleitung weist zumindest einen in horizontaler Richtung verlaufenden Abschnitt auf, der entlang von mindestens einer horizontal, d.h. rechtwinklig zur Aufbaurichtung verlaufenden Lage des Pulverbetts verläuft. An diesen Abschnitt können sich zwei oder ggf. mehr im Wesentlichen in vertikaler Richtung verlaufende Abschnitte anschließen, um den Leiter bzw. die Rohrleitung mit einer Funktionsschnittstelle in der Grundplatte zu verbinden. Alternativ kann der Leiter bzw. die Rohrleitung als Ganzes in horizontaler Richtung verlaufen, wobei sich in diesem Fall die Funktionsschnittstelle zur Verbindung mit der Versorgungseinrichtung auf gleicher Höhe wie der Leiter bzw. die Rohrleitung befindet. Bei dieser Variante können die elektrische Leitung und/oder die Rohrleitung durch das Aufbringen von vergleichsweise wenigen durch das Laserschmelzen bearbeiteten Werkstoffpulverschichten generiert werden.

Bei einer weiteren bevorzugten Variante wird die Rohrleitung beim Generieren einstückig mit dem bereits fertiggestellten Bereich des dreidimensionalen Bauteils ausgebildet, wobei ein Hohlraum der Rohrleitung an einer Außenseite des fertiggestellten Bereichs endet und/oder eine Innenseite der Rohrleitung und eine Außenseite des fertiggestellten Bereichs des Bauteils einen Hohlraum der Rohrleitung bilden. Auf diese Weise können beispielsweise reaktive Gase oder Flüssigkeiten, welche die metallurgische Beschaffenheit des Bauteils bzw. des Bauteilmaterials beeinflussen zu dem bereits fertiggestellten Bereich des Bauteils befördert werden. Endet der Hohlraum der Rohrleitung an der Außenseite des fertiggestellten Bereichs, so kann das über die Rohrleitung zugeführte reaktive Gas oder die reaktive Flüssigkeit den fertiggestellten Bereich gezielt lokal beeinflussen. Bildet hingegen die Innenseite der Rohrleitung und ein Abschnitt an der Außenseite des fertiggestellten Bereichs den Hohlraum der Rohrleitung, werden in der Regel größere Abschnitte des fertiggestellten Bereichs von dem die Rohrleitung durchströmenden oder durchfließenden Medium kontaktiert und reaktiv und/oder thermisch beeinflusst. Es versteht sich, dass die Rohrleitung gemäß dieser Verfahrensvariante auch zur direkten Kühlung oder Erwärmung durch Konvektion an der entsprechenden Außenseite des fertiggestellten Bereichs eingesetzt werden kann. Die Verbindung der Rohrleitung mit dem Bauteil erfolgt bevorzugt über vergleichsweise dünne Anbindungsstellen, die es im Idealfall ermöglichen, nach der Fertigstellung des Bauteils die Rohrleitung manuell, d.h. ohne Zuhilfenahme eines Werkzeugs, abzutrennen.

Bevorzugt ist ferner eine Variante, bei der die geometrische Form der Prozessbeeinflussungseinrichtung an die Geometrie des bereits fertiggestellten Bereichs des Bauteils angepasst wird. Sowohl bei einer induktiven, konduktiven als auch konvektiven Beeinflussung (insbesondere beim Temperieren, d.h. beim Heizen oder beim Kühlen, kann die Effizienz durch eine geometrische Anpassung der Prozessbeeinflussungseinrichtung an den fertiggestellten Bereich deutlich verbessert werden. Eine derartige Anpassung kann, wenn die Prozessbeeinflussungseinrichtung beispielsweise als elektrischer Leiter ausgebildet ist und das Bauteil beispielsweise einen kreisförmigen Querschnitt aufweist, dadurch erreicht werden, dass der elektrische Leiter den bereits fertiggestellten Bereich des dreidimensionalen Bauteils kreisringförmig umgibt. Besonders bevorzugt wird die Prozessbeeinflussungseinrichtung dabei beabstandet vom bereits fertiggestellten Bereich des Bauteils, insbesondere in einem Abstand von mehreren Millimetern generiert. Die Eindringtiefe des Induktionsfeldes ist abhängig von der Frequenz des Induktionsfeldes und kann somit innerhalb bestimmter Grenzen variiert bzw. beeinflusst werden. Bevorzugt wird die Prozessbeeinflussungseinrichtung, genauer gesagt der elektrische Leiter, in einem möglichst kleinen Abstand zum bereits fertiggestellten Bereich des Bauteils generiert, da in diesem Fall zusätzlich zur induktiven Erwärmung auch eine mittelbare konduktive Erwärmung über das umgebende metallische Pulver bewirkt werden kann.

Die Aufgabe wird auch gelöst durch eine Bearbeitungsmaschine der eingangs genannten Art, die gekennzeichnet ist durch mindestens eine Funktionsschnittstelle, die sich in die Prozesskammer erstreckt und mit einer Prozessbeeinflussungseinrichtung zum Einwirken auf einen bereits fertiggestellten Bereich des Bauteils während des selektiven Laserschmelzens verbindbar ist, sowie eine Versorgungseinrichtung für die Prozessbeeinflussungseinrichtung, die mit der Funktionsschnittstelle verbunden ist, wobei die Versorgungseinrichtung als Spannungserzeugungseinrichtung ausgebildet ist, die über die Funktionsschnittstelle in Form von Durchsteckkontakten mit einem Zuleitungsende und einem Ableitungsende der als elektrischer Leiter ausgebildeten Prozessbeeinflussungseinrichtung verbindbar ist.

Durch die Spannungserzeugungseinrichtung kann der für die vorbeschriebene induktive Wärmeerzeugung in den fertiggestellten Bereichen des Bauteils erforderliche Strom beispielsweise als alternierend angelegter Gleichstrom oder als Wechselstrom erzeugt werden, indem zur Erzeugung des Stroms mit einer gewünschten Stromstärke eine geeignete Spannung und eine gewünschte Polarität bzw. Frequenz bereitgestellt werden.

Die Funktionsschnittstelle erstreckt sich in die Prozesskammer, d.h. diese mündet in die Prozesskammer und kann insbesondere in die Prozesskammer ragen, um die Verbindung mit der Prozessbeeinflussungseinrichtung zu bewirken.

Die Bearbeitungsmaschine weist die weiter oben im Zusammenhang mit dem erfindungsgemäßen Verfahren beschriebenen Vorteile auf. Dabei stellt die Versorgungseinrichtung die für das Einwirken auf den bereits fertiggestellten Bereich erforderlichen Mittel, elektrische Ströme sowie ggf. gasförmige oder flüssige Medien bereit. Über die Funktionsschnittstelle und die Prozessbeeinflussungseinrichtung können diese Mittel von außerhalb der Prozesskammer in den innerhalb der Prozesskammer liegenden Einwirkungsbereich (zum bereits fertiggestellten Bereich des Bauteils) befördert werden, sodass diese ihre Wirkung (thermisch, chemisch, etc.) entfalten können.

Bei einer bevorzugten Ausführungsform der Bearbeitungsmaschine ist die Funktionsschnittstelle an einer Grundplatte zum schichtweisen Generieren des dreidimensionalen Bauteils ausgebildet. Um eine möglichst gleichmäßige schichtweise Verteilung des zum Laserschmelzen erforderlichen Werkstoffpulvers zu erreichen, ist die Grundplatte typischerweise horizontal ausgerichtet und wird im Laufe des selektiven Laserschmelzens um die Höhe einer jeweiligen Schichtdicke vertikal (in Aufbaurichtung) nach unten verfahren. Wenn die Funktionsschnittstelle an der Grundplatte ausgebildet ist, werden beim schrittweisen Verfahren der Grundplatte die Funktionsschnittstelle und die mit der Funktionsschnittstelle verbundene bzw. an diese angeschlossene Prozessbeeinflussungseinrichtung sowie das Werkstoffpulver und der bereits fertiggestellte Bereich des Bauteils mitbewegt. Eine Relativbewegung zu anderen Teilen der Bearbeitungsmaschine erfolgt ausschließlich an den Schnittstellen zwischen der Grundplatte und beispielsweise einem feststehenden Rahmen der Bearbeitungsmaschine. Es versteht sich, dass eine oder mehrere Funktionsschnittstellen auch an anderer Stelle in der Bearbeitungsmaschine, beispielsweise an einer Seitenwand der Prozesskammer, angebracht werden können.

Eine weitere Versorgungseinrichtung der Bearbeitungsmaschine kann als Zuführeinrichtung für gasförmige oder flüssige Medien ausgebildet sein, die mit einer als Rohrleitung ausgebildeten Prozessbeeinflussungseinrichtung verbindbar ist. Durch die Zuführeinrichtung können die für die vorbeschriebene konduktive und/oder chemische Einwirkung auf die fertiggestellten Bereiche des Bauteils erforderlichen gasförmigen und/oder flüssigen Medien mit einer gewünschten Temperatur und einem gewünschten Druck bereitgestellt werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: einen Querschnitt eines Ausführungsbeispiels einer Bearbeitungsmaschine zum Generieren eines Bauteils durch selektives Laserschmelzen, bei der als elektrische Leiter bzw. Induktoren ausgebildete Prozessbeeinflussungseinrichtungen durch selektives Laserschmelzen generiert und aktiviert wurden,
- Fig. 2: eine Darstellung einer Bearbeitungsmaschine analog Fig. 1 mit einer Prozessbeeinflussungseinrichtung in Form einer Rohrleitung, die durch selektives Laserschmelzen generiert wurde,
- Fig. 3: eine Darstellung einer Bearbeitungsmaschine analog Fig. 1 mit einer Prozessbeeinflussungseinrichtung in Form einer einstückig mit dem Bauteil verbundenen Rohrleitung, und
- Fig. 4: eine Darstellung einer Bearbeitungsmaschine analog Fig. 1 mit einer als Rohrleitung zur gezielten Gaszuführung in die Prozesskammer ausgebildeten Prozessbeeinflussungseinrichtung.

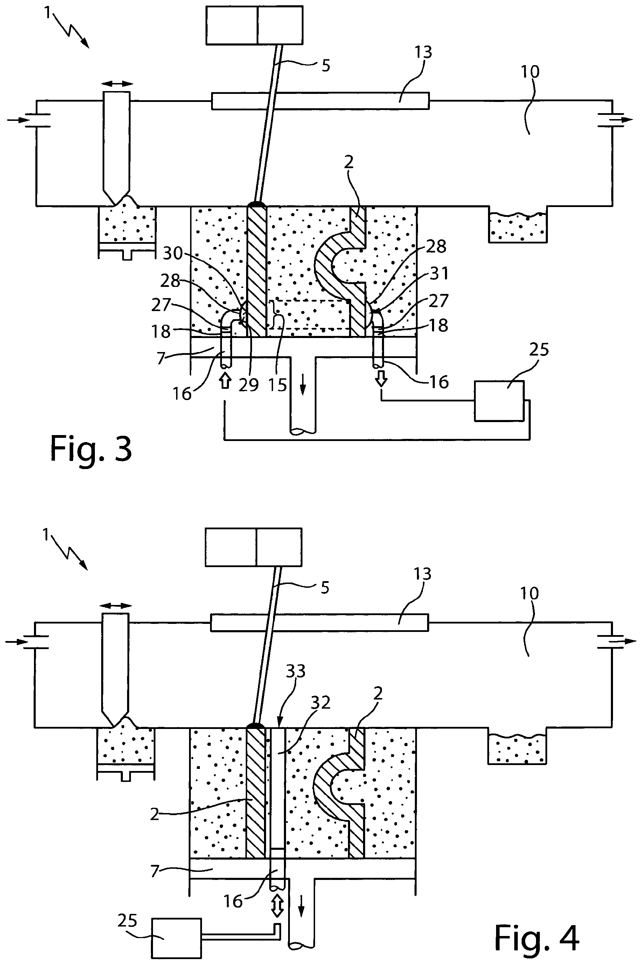

Figuren 3 und 4 stellen nicht die Erfindung dar. In der folgenden Beschreibung der Zeichnungen werden für gleiche bzw. funktionsgleiche Bauteile identische Bezugszeichen verwendet.

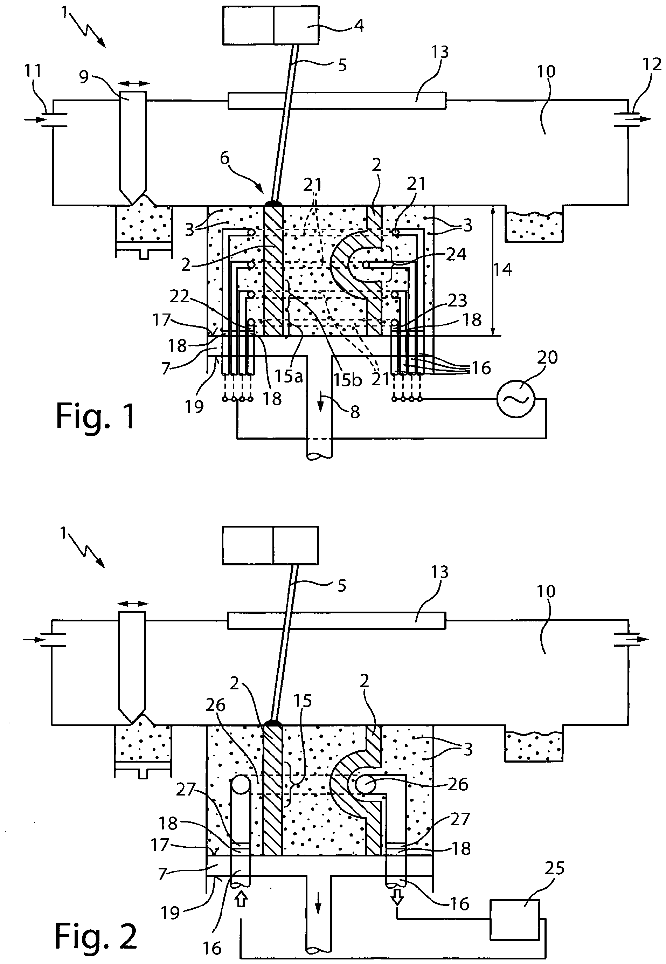

**Fig. 1** zeigt eine Bearbeitungsmaschine 1 zum Generieren eines dreidimensionalen, in einem Querschnitt dargestellten Bauteils 2 durch selektives Laserschmelzen. Beim selektiven Laserschmelzen wird ein Werkstoffpulver 3 schichtweise mittels eines über eine Scannervorrichtung 4 gezielt abgelenkten Laserstrahls 5 an entsprechend der gewünschten Bauteilgeometrie vorgesehenen Stellen 6 eines von dem Werkstoffpulver 3 gebildeten Pulverbetts umgeschmolzen. Nachdem der Laserschmelzvorgang in einer ersten Werkstoffpulverschicht durchgeführt wurde und das Werkstoffpulver 3 an den entsprechenden Stellen 6 erstarrt ist, wird die Grundplatte 7, auf der die erste Schicht generiert wurde, um den Betrag der ersten Schichtdicke in Schwerkraftrichtung 8, d.h. nach unten, abgesenkt und eine zweite Werkstoffpulverschicht wird mittels eines Schiebers 9 über der ersten Schicht aufgebracht. Anschließend wird das selektive Laserschmelzen so lange wiederholt, bis das dreidimensionale Bauteil 2 vollständig generiert ist. Um eine Reaktion von bei der Bildung des Bauteils 2 entstehenden Prozessgasen mit dem Laserstrahls 5 zu vermeiden, werden über eine Zuleitung 11 und eine Ausleitung 12 Schutzgase, wie beispielsweise Argon oder Stickstoff, in eine Prozesskammer 10 eingebracht. Bei der in Fig. 1 gezeigten Anordnung der Zuleitung 11 und Ausleitung 12 wird eine Strömung des Schutzgases parallel zu einem Prozesskammerfenster 13 erzeugt, durch welches der zum Schmelzen des Werkstoffpulvers 3 erforderliche Laserstrahl 5 in die Prozesskammer 10 eintritt. Auf diese Weise soll eine Kontamination des Prozesskammerfensters 13 durch Ablagerungen des Prozessgases vermieden werden.

Um durch selektives Laserschmelzen das dreidimensionale Bauteil 2, welches in Fig. 1 gezeigt ist, vollständig fertigzustellen, ist eine Vielzahl an schichtweisen Laserschmelzvorgängen erforderlich. Einzelne Schichten sind typischerweise mehrere Mikrometer dick, sodass abhängig von der Bauteilhöhe 14 des zu generierenden Bauteils 2 zwischen dem Beginn des Laserschmelzens und der vollständigen Fertigstellung des Bauteils 2 beispielsweise bis zu mehrere tausend schichtweise Schmelzvorgänge erforderlich sein können. Vor der vollständigen Fertigstellung des Bauteils 2 existieren bereits fertiggestellte Bereiche 15a, 15b des Bauteils 2, welche typischer Weise mehrere umgeschmolzene und erstarrte Einzelschichten umfassen.

Die Bearbeitungsmaschine 1 weist eine Mehrzahl an Funktionsschnittstellen 16 auf, die jeweils an der verfahrbaren Grundplatte 7 ausgebildet sind. Die Funktionsschnittstellen 16 weisen im gezeigten Beispiel Anschlussstücke 18 auf, die an der Oberseite 17 der Grundpatte 7 gebildet sind und in die Prozesskammer 10 hinein ragen. Auf der gegenüber liegenden Seite (der Unterseite 19 der Grundplatte 7) sind die im gezeigten Beispiel stabförmigen Funktionsschnittstellen 16 mit einer als Spannungserzeugungseinrichtung 20 ausgebildeten Versorgungseinrichtung verbunden.

Während des Generierens des dreidimensionalen Bauteils 2, aber noch vor dessen Fertigstellung werden durch das selektive Laserschmelzen in der Prozesskammer 10 als elektrische Leiter 21 ausgebildete Prozessbeeinflussungseinrichtungen generiert, durch die auf einen bereits fertiggestellten Bereich 15a,15b des Bauteils 2 durch elektrische Induktion thermisch eingewirkt werden kann. Zu diesem Zweck werden die elektrischen Leiter 21 vor der Fertigstellung des Bauteils 2, d.h. während die elektrischen Leiter 21 in das Pulverbett eingebettet sind, mit Hilfe der Spannungserzeugungseinrichtung 20 in Betrieb genommen bzw. aktiviert. Beim zeitgleichen Generieren der Bereiche 15a, 15b des Bauteils 2 und des elektrischen Leiters 21 wird ein- und derselbe Laserstrahl 5 verwendet.

In Fig. 1 ist die Spannungserzeugungseinrichtung 20 unter anderem über eine erste (bezüglich des Bauteils 2 radial am weitesten innen liegende) Funktionsschnittstelle 16, die ein erstes und ein zweites Anschlussstück 18 aufweist, mit einem Zuleitungsende 22 und einem Ableitungsende 23 der ersten (untersten) elektrischen Leitung 21 verbunden. Durch die Inbetriebnahme der Spannungserzeugungseinrichtung 20 kann die elektrische Leitung 21 beispielsweise mit einem alternierend angelegten Gleichstrom oder einem Wechselstrom einer vorbestimmten Frequenz und Stromstärke beaufschlagt werden, wodurch in der Fig. 1 in dem ersten zu einem ersten Zeitpunkt fertiggestellten unteren Bereich 15a Wechselströme induziert werden können, die das Bauteil 2 in diesem Bereich 15a lokal aufheizen. Es versteht sich, dass je nach Höhe der Stromstärke (bzw. der dieser zugeordneten Spannung), Frequenz und/oder des verwendeten Werkstoffpulvermaterials die Stärke der Heizeinwirkung auf den bereits fertiggestellten Bereich 15a variiert werden kann. Da zeitgleich zum weiteren Generieren des dreidimensionalen Bauteils 2 die weiteren elektrischen Leitungen 21 (bzw. Prozessbeeinflussungseinrichtungen) generiert werden, kann unmittelbar nach Fertigstellung der jeweils letzten elektrischen Leitung 21 diese durch die Spannungserzeugungseinrichtung 20 zusätzlich in Betrieb genommen werden und somit auf einen weiteren fertiggestellten Bereich des Bauteils 2 thermisch eingewirkt werden, wie in Fig. 1 beispielhaft für den weiteren fertiggestellten Bereich 15b gezeigt ist, welcher von der zweiten elektrischen Leitung 21 (von der Grundplatte 7 aus gesehen) geheizt wird. Durch die direkte und lokale thermische Beeinflussung der fertiggestellten Bereiche 15a,15b, die bereits während der Generierung des Bauteils 2 erfolgt, kann die Qualität des generierten Bauteils 2 wesentlich verbessert werden. Beispielsweise kann einer Abweichung des generierten Bauteils 2 von der Sollgeometrie aufgrund von Wärmeeinflüssen insbesondere aufgrund von thermisch induzierten Eigenspannungen gezielt entgegengewirkt werden.

Die elektrischen Leitungen 21 weisen in der Fig. 1 jeweils einen (im Wesentlichen) in horizontaler Richtung verlaufenden Abschnitt auf, der beabstandet von dem korrespondierenden bereits fertiggestellten Bereich 15a, 15b verläuft. Dabei umgeben sie, insbesondere kreis- bzw. schraubenförmig, das in der Fig. 1 im Querschnitt dargestellte und zylinderförmig ausgebildete dreidimensionale Bauteil 2 bzw. den jeweils fertiggestellten Bereich 15a, 15b. An den im Wesentlichen in horizontaler Richtung verlaufenden Abschnitt des elektrischen Leiters 21 schließen sich das vertikale Zuleitungsende 22 und das Ableitungsende 23 an, die den elektrischen Kontakt zu der Spannungserzeugungseinrichtung 20 bilden. Es versteht sich, dass aufgrund der Verwendung von Wechselstrom bzw. von alternierend erzeugtem Gleichstrom die Unterscheidung zwischen Zuleitungsende 22 und Ableitungsende 23 bei dem in Zusammenhang mit Fig. 1 beschriebenen Ausführungsbeispiel nicht ganz zutreffend ist.

Die Anpassung der elektrischen Leiter 21 zumindest in dem in horizontaler Richtung verlaufenden Abschnitt an die geometrische Form der Bereiche 15a, 15b (kreisförmige Leiter 21 an im Querschnitt ebenfalls kreisförmige Bauteil-Bereiche 15a, 15b) ist in Fig. 1 weiterhin im Bereich eines Einbuchtungsabschnitts 24 des Bauteils 2 gegeben, in dem der Durchmesser des ringförmig umlaufenden Abschnitts der von der Grundplatte 7 aus gesehen dritten elektrischen Leitung 21 verringert ist, um eine hohe Effektivität der induktiven Wärmeeinwirkung auch im Bereich des Einbuchtungsabschnitts 24 sicherzustellen. Es hat sich als günstig erwiesen, wenn der Durchmesser der elektrischen Leiter 21 größer ist als die Dicke des generierten Bauteils 2, da sich auf diese Weise das Bauteil 2 stärker erwärmt als der Induktionsleiter 21. Auf diese Weise kann das Bauteil 2 auf Temperaturen von bis zu 1000°C aufgeheizt und dabei ggf. lokal aufgeschmolzen werden, ohne dass sich der elektrische Leiter 21 selbst zu stark erwärmt und hierbei deformiert. Hierzu trägt vorteilhaft bei, dass bei einer Erwärmung des elektrischen Leiters 21 Wärme mittelbar über das metallische Pulver 3 an das Bauteil 2 abgegeben wird.

Alternativ oder zusätzlich zur Generierung von elektrischen Leitern 21, die vom Bauteil 2 beabstandet sind, kann ggf. das Bauteil 2 an einzelnen Stellen bzw. Bereichen direkt mit mehreren (dünnen) elektrischen Leitern, die auf die oben beschriebene Weise generiert werden, in Kontakt gebracht werden, um das Bauteil 2 direkt mit Strom zu beaufschlagen und konduktiv zu erwärmen. Die elektrischen Leiter weisen eine höhere Dichte und damit auch eine größere Leitfähigkeit als der umgebende Pulverwerkstoff 3 auf und dienen der Ausbildung von Strompfaden im Pulverwerkstoff 3.

**Fig. 2** zeigt eine Bearbeitungsmaschine 1, die eine als Zuführeinrichtung 25 für gasförmige oder flüssige Medien ausgebildete Versorgungseinrichtung umfasst. Bei der Darstellung von Fig. 2 wurde das dreidimensionale Bauteil 2 bereits vollständig generiert. An der Grundplatte 7 weist die Bearbeitungsmaschine 1 eine Funktionsschnittstelle 16 auf, die auf der Oberseite 17 der Grundpatte 7 über ein erstes und zweites Anschlussstück 18 in die Prozesskammer 10 hineinragt und die an der Unterseite 19 der Grundplatte 7 mit der Zuführeinrichtung 25 verbunden ist.

Durch das selektive Laserschmelzen ist es möglich, noch während des Generierens des dreidimensionalen Bauteils 2, also noch vor Fertigstellung des gesamten Bauteils 2, in der Prozesskammer 10 eine als eine Rohrleitung 26 ausgebildete Prozessbeeinflussungseinrichtung zu generieren, durch die auf einen bereits fertiggestellten Bereich 15 des Bauteils 2 thermisch eingewirkt werden kann. Die Rohrleitung 26 wird dabei typischerweise in einem einenends mit dem ersten Anschlussstück 18 und anderenends mit dem zweiten Anschlussstück 18 verbundenen Zustand generiert, wobei an dem jeweiligen Anschlussstück 18 zur Verbindung mit der Rohrleitung 26 Anschlüsse 27 angebracht sind, die beispielsweise als lösbare Steckanschlüsse der Funktionsschnittstelle 16 ausgebildet sein können. Zur thermischen Einwirkung auf den fertiggestellten Bereich 15 wird die Zuführeinrichtung 25 vor der Fertigstellung des dreidimensionalen Bauteils 2 in Betrieb genommen und ein gasförmiges oder flüssiges Kühl- oder Heizmedium in dem durch die Zuführeinrichtung 25, die Funktionsschnittstelle 16 und die Rohrleitung 26 gebildeten Funktionskreislauf gefördert, um einen Wärmetauscher zu realisieren. Auch auf diese Weise kann durch eine gezielte Wärmeführung der Bildung von Heizrissen, Verzug, Erzeugung unerwünschter metallischer Phasen etc. in den bereits fertiggestellten Bereichen 15 des Bauteils 2 entgegen gewirkt werden. Entsprechend Fig. 1 wird auch die Rohrleitung 26 der Fig. 2 mit einem horizontal verlaufenden Abschnitt und einer an die Geometrie des bereits fertiggestellten Bereichs 15 des Bauteils 2 angepassten Form (rundumlaufend) generiert. Die Rohrleitung 26 ist nicht zwingend als (im Wesentlichen zylindrischer) Mantel mit einem Hohlraum ausgebildet, es können auch Hohlkörperstrukturen beispielsweise in Form von (filigranen) porösen Strukturen in der Art von Metallschäumen generiert werden, die ggf. von einem (massiven) Mantel umgeben sind. Allgemein sind als Prozessbeeinflussungseinrichtungen Strukturen vorteilhaft, die für die Medien (Fluide, Strom) im Pulverbett 3 Vorzugswege darstellen, d.h. entweder höhere Dichte als das Pulver bzw. das Pulverbett 3 aufweisen (Strom) oder umgekehrt eine niedrigere Dichte als das umgebende Pulverbett 3 aufweisen, um Hohlkörperstrukturen für den Transport von Fluiden zu bilden.

In **Fig. 3** ist eine weitere Bearbeitungsmaschine 1 dargestellt, welche nicht die Erfindung entspricht, deren an der Grundplatte 7 ausgebildete Funktionsschnittstelle 16 ein erstes und ein zweites in die Prozesskammer 10 hinein ragendes Anschlussstück 18 aufweist. Das in Fig. 3 gezeigte Beispiel unterscheidet sich von dem in Zusammenhang mit Fig. 2 beschriebenen Beispiel im Wesentlichen dadurch, dass durch das selektive Laserschmelzen eine Rohrleitung 28 als Prozessbeeinflussungseinrichtung generiert wurde, die einstückig mit dem korrespondierenden bereits fertiggestellten Bereich 15 des Bauteils 2 ausgebildet ist, wobei eine Innenseite 29 der Rohrleitung 28 und eine Außenseite 30 des fertiggestellten Bereichs 15 einen rund umlaufenden Hohlraum 31 der Rohrleitung 28 bilden. Die Rohrleitung 28 ist über Anschlüsse 27 mit der Funktionsschnittstelle 16 verbunden, die ein Hindurchtreten des Pulverwerkstoffs 3 beim Generieren der Rohrleitung 28 verhindern. Die Anschlüsse 27 (z.B. in der Art von Plastikplatten) können vor der Aktivierung der Rohrleitung 28 geöffnet werden, z.B. indem diese durchstochen werden, bevor gasförmige oder flüssige Medien zum direkten konduktiven Kühlen bzw. Heizen des fertiggestellten Bereichs 15 durch die Rohrleitung 28 transportiert werden.

Zur chemischen Einwirkung auf den fertiggestellten Bereich 15 kann beispielsweise ein reaktives Gas oder eine reaktive Flüssigkeit durch den aus der Zuführeinrichtung 25, der Funktionsschnittstelle 16 und der Rohrleitung 28 gebildeten Funktionskreislauf gefördert werden, sodass sich aufgrund einer an der Oberfläche bzw. der Außenseite 30 des fertiggestellten Bereichs 15 ablaufenden chemischen Reaktion eine gewünschte metallurgische Beschaffenheit des Bauteils 2 einstellt. Auch auf diese Weise kann die Qualität des hergestellten dreidimensionalen Bauteils 2 verbessert werden.

In **Fig. 4** ist schließlich ein weiteres Beispiel einer Bearbeitungsmaschine 1 mit einer weiteren an der Grundplatte 7 angeordneten Funktionsschnittstelle 16 welche nicht die Erfindung entspricht, bei der wie in der vorbeschriebenen Lehre zeitgleich zur Generierung des Bauteils 2 eine einenends mit der Funktionsschnittstelle 16 verbundene Rohrleitung 32 generiert wurde, deren anderes Ende zur Prozesskammer 10 hin offen ist. Mittels der Zuführeinrichtung 25 und der Rohrleitung 32 kann ein in aller Regel inertes Hilfsgas durch das offene Ende 33 der Rohrleitung 32 in die Prozesskammer 10 geführt werden und dort eine Strömung mit einem gewünschten Strömungsprofil erzeugen. Hierbei kann insbesondere eine Strömung erzeugt werden, die durch das Laserschmelzen entstandene gasförmige Prozessemissionen von dem Einflussbereich des Laserstrahls 5 abhält und/oder die eine Ablagerung solcher Prozessemissionen an dem Prozesskammerfenster 13 verhindert, wodurch ebenfalls die Qualität des Laserschmelzverfahrens sowie des damit hergestellten Bauteils 2 und ggf. die Lebensdauer des Prozesskammerfensters verbessert werden.

In Fig. 1 bis Fig. 4 wurden jeweils unterschiedliche Prozessbeeinflussungseinrichtungen 21;26;28;32 in der Prozesskammer 10 generiert. Es versteht sich, dass die Grundplatte 7 der Bearbeitungsmaschine 1 jedoch auch eine beliebige Kombination an unterschiedlich ausgebildeten Funktionsschnittstellen 16 bzw. unterschiedliche Versorgungseinrichtungen 20;25 aufweisen kann, sodass in ein und derselben Prozesskammer 10 auch eine beliebige Kombination an Prozessbeeinflussungseinrichtungen 21;26;28;32 zeitgleich zur Generation des Bauteils erzeugt und in Betrieb genommen werden können. Auch ist es nicht zwingend erforderlich, die Funktionsschnittstellen 16 an der Grundplatte 7 anzuordnen, vielmehr können diese beispielsweise an einer (vertikalen) Seitenwand der Prozesskammer 10 im Bereich des Pulverbetts angebracht werden.

Als Werkstoffpulver 3 zum Generieren des Bauteils 2 und der Prozessbeeinflussungseinrichtungen 21;26;28;32 können unterschiedliche Materialien eingesetzt werden, die beispielsweise ausgewählt sind aus der Gruppe umfassend: Edelstahl, Werkzeugstahl, Aluminium, Aluminiumlegierungen, Titan, Titanlegierungen, Chrom-Kobalt-Molybdän-Legierungen, Bronzelegierungen, Edelmetalllegierungen, Nickelbasislegierungen, Kupferlegierungen.

Auf die oben beschriebene Weise kann u.a. eine direkte und lokale Beeinflussung des selektiven Laserschmelzprozesses erfolgen, indem eine lokale und bedarfsgerechte Wärmeführung ermöglicht wird. Auch können Probleme, die durch eine geringere Wärmeausdehnung des Bauteils 2 in der Umgebung der Grundplatte 7 gegenüber dem Bereich, in dem die Schmelze gebildet wird, entstehen, durch eine gezielte Wärmeführung des Bauteils verringert werden. Zudem kann durch eine induktive Wärmeeinkopplung in das Bauteil 2, wie sie im Zusammenhang mit Fig. 1 dargestellt ist, die Verlustwärme gegenüber einer konduktiven Wärmeeinkopplung gesenkt werden, da aufgrund der vergleichsweise geringen Schüttdichte und der geringen Partikelgröße der Pulverwerkstoff 3 beim induktiven Heizen nur geringfügig erwärmt wird.

## Patentansprüche

1. Verfahren zum Generieren eines dreidimensionalen Bauteils (2) durch selektives Laserschmelzen, umfassend:
Generieren mindestens einer Prozessbeeinflussungseinrichtung (21;26;28;32) durch selektives Laserschmelzen während des Generierens des dreidimensionalen Bauteils (2), sowie
Aktivieren der Prozessbeeinflussungseinrichtung (21;26;28;32) zum Einwirken auf einen bereits fertiggestellten Bereich (15;15a,15b) des dreidimensionalen Bauteils (2) vor der Fertigstellung des dreidimensionalen Bauteils (2) **dadurch gekennzeichnet,**
**dass** als Prozessbeeinflussungseinrichtung ein elektrischer Leiter (21) generiert wird, der zum Einwirken auf den bereits fertiggestellten Bereich (15, 15a, 15b) mit einem Stromfluss beaufschlagt wird.

2. Verfahren nach Anspruch 1, bei dem die Prozessbeeinflussungseinrichtung (21;26;28;32) beim Generieren mit einer Funktionsschnittstelle (16) einer das selektive Laserschmelzen durchführenden Bearbeitungsmaschine (1) verbunden wird.

3. Verfahren nach Anspruch 2, bei dem die Prozessbeeinflussungseinrichtung (21;26;28;32) beim Generieren jeweils über ein Zuleitungsende (22) und ein Ableitungsende (23) mit der Funktionsschnittstelle (16) verbunden wird.

4. Verfahren nach einem der vorhergehenden Ansprüche, bei dem der elektrische Leiter (21) den bereits fertiggestellten Bereich (15a, 15b) des dreidimensionalen Bauteils (2) zumindest teilweise umgibt.

5. Verfahren nach einem der vorhergehenden Ansprüche, bei dem ein Werkstoffpulver (13) zum Generieren des Bauteils (2) und/oder der Prozessbeeinflussungseinrichtung (21;26;28;32) ausgewählt ist aus der Gruppe umfassend: Edelstahl, Werkzeugstahl, Aluminium, Aluminiumlegierungen, Titan, Titanlegierungen, Chrom-Kobalt-Molybdän-Legierungen, Bronzelegierungen, Edelmetalllegierungen, Nickelbasislegierungen, Kupferlegierungen.

6. Verfahren nach einem der vorhergehenden Ansprüche, bei dem als Prozessbeeinflussungseinrichtung eine Rohrleitung (26;28;32) für gasförmige und/oder flüssige Medien generiert wird.

7. Verfahren nach einem der Ansprüche 3 bis 6, bei dem der elektrische Leiter (21) und/oder die Rohrleitung (26;28;32) zumindest abschnittsweise horizontal verlaufen.

8. Verfahren nach Anspruch 6 oder 7, bei dem die Rohrleitung (28) beim Generieren einstückig mit dem bereits fertiggestellten Bereich (15) des dreidimensionalen Bauteils (2) ausgebildet wird, wobei ein Hohlraum (31) der Rohrleitung (28) an einer Außenseite (30) des fertiggestellten Bereichs (15) endet und/oder wobei eine Innenseite (29) der Rohrleitung (28) und eine Außenseite (30) des fertiggestellten Bereichs (15) des Bauteils (2) einen Hohlraum (31) der Rohrleitung (28) bilden.

9. Verfahren nach einem der vorhergehenden Ansprüche, bei dem die geometrische Form der Prozessbeeinflussungseinrichtung (21;26;28;32) an die Geometrie des bereits fertiggestellten Bereichs (15;15a,15b) des Bauteils (2) angepasst wird.

10. Verfahren nach einem der vorhergehenden Ansprüche, bei dem die Prozessbeeinflussungseinrichtung (21;26;28;32) beabstandet zum bereits fertiggestellten Bereich (15;15a,15b) des Bauteils (2) generiert wird.

11. Bearbeitungsmaschine (1) zum Generieren eines dreidimensionalen Bauteils (2) durch selektives Laserschmelzen, umfassend:
eine Prozesskammer (10),
mindestens eine Funktionsschnittstelle (16), welche sich in die Prozesskammer (10) erstreckt und mit einer Prozessbeeinflussungseinrichtung (21;26;28;32) zum Einwirken auf einen bereits fertiggestellten Bereich (15;15a,15b) des Bauteils (2) während des selektiven Laserschmelzens verbindbar ist, sowie
eine Versorgungseinrichtung (20;25) für die Prozessbeeinflussungseinrichtung (21;26;28;32), die mit der Funktionsschnittstelle (16) verbunden ist,
**dadurch gekennzeichnet**
**dass** die Versorgungseinrichtung als Spannungserzeugungseinrichtung (20) ausgebildet ist, die über die Funktionsschnittstelle (16) in Form von Durchsteckkontakten mit einem Zuleitungsende (22) und einem Ableitungsende (23) der als elektrischer Leiter (21) ausgebildeten Prozessbeeinflussungseinrichtung verbindbar ist.

12. Bearbeitungsmaschine nach Anspruch 11, bei der die Funktionsschnittstelle (16) an einer Grundplatte (7) zum schichtweisen Generieren des dreidimensionalen Bauteils (2) ausgebildet ist.

## Claims

1. Method for generating a three-dimensional component (2) by selective laser melting comprising:
generating at least one process-influencing device (21; 26; 28; 32) by selective laser melting during generation of the three-dimensional component (2) and
activating the process-influencing device (21; 26; 28; 32) to act on an already completed area (15; 15a, 15b) of the three-dimensional component (2) prior to completion of the three-dimensional component (2),
**characterised in that**
an electrical conductor (21) is generated as the process-influencing device, which conductor is exposed to a current flow in order to act on the area (15, 15a, 15b) that is already completed.

2. Method according to Claim 1, wherein, during generation, the process-influencing device (21; 26; 28; 32) is connected to a functional interface (16) of a processing machine (1) carrying out the selective laser melting.

3. Method according to Claim 2, wherein the process-influencing device (21; 26; 28; 32) is connected to the functional interface (16) during generation via a supply end (22) and a discharge end (23) in each case.

4. Method according to one of the preceding claims, wherein the electrical conductor (21) at least partially surrounds the area (15a, 15b) of the three-dimensional component (2) already completed.

5. Method according to one of the preceding claims, wherein a material powder (13) for generating the component (2) and/or the process-influencing device (21; 26; 28; 32) is selected from the group comprising: stainless steel, tool steel, aluminium, aluminium alloys, titanium, titanium alloys, chrome-cobalt-molybdenum alloys, bronze alloys, stainless steel alloys, nickel-based alloys, copper alloys.

6. Method according to one of the preceding claims, wherein a pipeline (26; 28; 32) for gaseous and/or liquid media is generated as the process-influencing device.

7. Method according to one of the Claims 3 to 6, wherein the electrical conductor (21) and/or the pipeline (26; 28; 32) run horizontally at least in sections.

8. Method according to Claim 6 or 7, wherein the pipeline (28) is configured integrally with the already completed area (15) of the three-dimensional component (2) during generation, wherein a hollow space (31) in the pipeline (28) ends on an outside (30) of the completed area (15) and/or wherein an inside (29) of the pipeline (28) and an outside (30) of the completed area (15) of the component (2) form a hollow space (31) in the pipeline (28).

9. Method according to one of the preceding claims, wherein the geometric shape of the process-influencing device (21; 26; 28; 32) is adapted to the geometry of the already completed area (15; 15a,15b) of the component (2).

10. method according to one of the preceding claims, wherein the process-influencing device (21; 26; 28; 32) is generated to be spaced apart from the already completed area (15; 15a, 15b) of the component (2).

11. Processing machine (1) for generating a three-dimensional component (2) by selective laser melting comprising:
a processing chamber (10),
at least one functional interface (16) which extends into the processing chamber (10) and can be connected to a process-influencing device (21; 26; 28; 32) for acting on an already completed area (15; 15a, 15b) of the component (2) during selective laser melting and also a supply device (20; 25) for the process-influencing device (21; 26; 28; 32), which is connected to the functional interface (16), **characterised in that** the supply device is configured as a voltage-generating device (20) which can be connected via the functional interface (16) in the form of through-hole contacts to a supply end (22) and a discharge end (23) of the process-influencing device configured as an electrical conductor (21).

12. Processing machine according to Claim 11, wherein the functional interface (16) is configured at a base plate (7) for the layer-by-layer generation of the three-dimensional component (2).

## Revendications

1. Procédé de production d'une pièce structurelle tridimensionnelle (2) par fusion laser sélective, consistant à :
produire au moins un dispositif (21 ; 26 ; 28 ; 32) d'influence des processus, par fusion laser sélective, au cours de la production de ladite pièce structurelle tridimensionnelle (2), ainsi qu'à
activer ledit dispositif (21 ; 26 ; 28 ; 32) d'influence des processus en vue d'agir sur une région déjà achevée (15 ; 15a, 15b) de la pièce structurelle tridimensionnelle (2), préalablement à l'achèvement de ladite pièce structurelle tridimensionnelle (2),
**caractérisé par**
la production, en tant que dispositif d'influence des processus, d'un conducteur électrique (21) sollicité par une circulation de courant en vue d'agir sur la région (15, 15a, 15b) déjà achevée.

2. Procédé selon la revendication 1, dans lequel le dispositif (21 ; 26 ; 28 ; 32) d'influence des processus est raccordé, au cours de la production, à un interface fonctionnel (16) d'une machine d'usinage (1) effectuant la fusion laser sélective.

3. Procédé selon la revendication 2, dans lequel le dispositif (21 ; 26 ; 28 ; 32) d'influence des processus est respectivement raccordé à l'interface fonctionnel (16), au cours de la production, par l'intermédiaire d'une extrémité d'arrivée (22) et d'une extrémité de décharge (23).

4. Procédé selon l'une des revendications précédentes, dans lequel le conducteur électrique (21) entoure, au moins partiellement, la région déjà achevée (15a, 15b) de la pièce structurelle tridimensionnelle (2).

5. Procédé selon l'une des revendications précédentes, dans lequel un matériau pulvérulent (13) est choisi, en vue de produire la pièce structurelle (2) et/ou le dispositif (21 ; 26 ; 28 ; 32) d'influence des processus, au sein du groupe comprenant : de l'acier spécial ou dit inoxydable, de l'acier d'outillage, de l'aluminium, des alliages d'aluminium, du titane, des alliages de titane, des alliages chrome-cobalt-molybdène, des alliages de bronze, des alliages de métaux nobles, des alliages à base de nickel, des alliages de cuivre.

6. Procédé selon l'une des revendications précédentes, dans lequel un conduit tubulaire (26 ; 28 ; 32), dédié à des fluides gazeux et/ou liquides, est produit en tant que dispositif d'influence du procédé.

7. Procédé selon l'une des revendications 3 à 6, dans lequel le conducteur électrique (21) et/ou le conduit tubulaire (26 ; 28 ; 32) s'étend(ent) horizontalement, au moins par zones.

8. Procédé selon la revendication 6 ou 7, dans lequel le conduit tubulaire (28) est réalisé d'un seul tenant avec la région déjà achevée (15) de la pièce structurelle tridimensionnelle (2), au cours de la production, sachant qu'une cavité (31) dudit conduit tubulaire (28) s'achève au niveau d'une face extérieure (30) de ladite région achevée (15), et/ou sachant qu'une face intérieure (29) dudit conduit tubulaire (28), et une face extérieure (30) de ladite région achevée (15) de ladite pièce structurelle (2), forment une cavité (31) dudit conduit tubulaire (28).

9. Procédé selon l'une des revendications précédentes, dans lequel la forme géométrique du dispositif (21 ; 26 ; 28 ; 32) d'influence des processus est mise en adaptation avec la géométrie de la région déjà achevée (15 ; 15a, 15b) de la pièce structurelle (2).

10. Procédé selon l'une des revendications précédentes, dans lequel le dispositif (21 ; 26 ; 28 ; 32) d'influence des processus est produit à distance de la région déjà achevée (15 ; 15a, 15b) de la pièce structurelle (2).

11. Machine d'usinage (1) dévolue à la production d'une pièce structurelle tridimensionnelle (2) par fusion laser sélective, incluant :
une chambre de traitement (10),
au moins un interface fonctionnel (16) qui s'engage dans ladite chambre de traitement (10) et peut être raccordé à un dispositif (21 ; 26 ; 28 ; 32) d'influence de processus en vue d'agir sur une région déjà achevée (15 ; 15a, 15b) de ladite pièce structurelle (2), au cours de ladite fusion laser sélective, ainsi
qu'un dispositif d'alimentation (20 ; 25), affecté audit dispositif (21 ; 26 ; 28 ; 32) d'influence des processus et raccordé audit interface fonctionnel (16),
**caractérisée par le fait**
**que** le dispositif d'alimentation est réalisé en tant que dispositif (20) générateur de tension pouvant être raccordé, par l'intermédiaire de l'interface fonctionnel (16) revêtant la forme de contacts enfichables, à une extrémité d'arrivée (22) et à une extrémité de décharge (23) du dispositif d'influence du processus qui est réalisé en tant que conducteur électrique (21).

12. Machine d'usinage selon la revendication 11, dans laquelle l'interface fonctionnel (16) est ménagé au niveau d'une platine de base (7), en vue de la production de la pièce structurelle tridimensionnelle (2) par couches successives.
